# EUROPÄISCHE PATENTSCHRIFT

(11) **EP 3 418 846 B1**
(45) Veröffentlichungstag und Bekanntmachung des Hinweises auf die Patenterteilung: **15.04.2020**
(21) Anmeldenummer: 18170997.3
(22) Anmeldetag: 07.05.2018
(51) Int. Cl.: G05D 1/02

(54) **VORRICHTUNG ZUR SICHERHEITSSTEUERUNG EINER MASCHINE**
DEVICE FOR SAFETY CONTROL OF A MACHINE
DISPOSITIF DE COMMANDE DE SÉCURITÉ D'UNE MACHINE

(30) Priorität: 19.06.2017 DE 102017113392
(43) Veröffentlichungstag der Anmeldung: 26.12.2018
(73) Patentinhaber: SICK AG, 79183 Waldkirch (DE)
(72) Erfinder: Plasberg, Georg, 79353 Bahlingen (DE); Rapp, Ralph, 79346 Endingen (DE); Wüstefeld, Martin, 79350 Sexau (DE)

(56) Entgegenhaltungen:
- EP-A2- 2 837 473
- DE-C1- 4 408 982
- US-A1- 2008 009 966
- US-A1- 2009 149 990

## Beschreibung

Die vorliegende Erfindung betrifft eine Vorrichtung zur Sicherheitssteuerung einer Maschine, mit wenigstens einem sicheren Objektsensor zur Detektion von Objekten und gleichzeitigen Überwachung mehrerer Segmente einer Fläche, einer sicheren Steuer- und Auswerteeinheit zur Auswertung der Signale des wenigstens einen Objektsensors und zur Erzeugung von Steuersignalen für die Maschine.

Derartige Vorrichtungen sind aus der EP 2 428 862 B1 und der DE 10 2005 049 159 A1 bekannt.

Eine Absicherung von Gefahrenbereichen erfolgt nach dem Stand der Technik beispielsweise über ein weiträumiges Absperren des Gefahrenbereichs, z. B. mit Zäunen. Damit ist eine Interaktion zwischen Maschine und Mensch nicht mehr möglich. Ist z. B. zur Störungsbeseitigung ein Betreten des Bereiches notwendig, wird die Maschine komplett abgeschaltet.

Weiter ist eine Absicherung mit einem Sensor bekannt, der einen Bereich vor bzw. um die Maschine überwacht, beispielsweise mit einem Laserscanner. Wird in dem durch diesen Sensor überwachten Bereich ein Objekt, möglicherweise ein Mensch erkannt, wird die Bewegung der Maschine gestoppt. Hier besteht das Problem, zur Erzielung einer angemessenen Produktivität in Abhängigkeit der konkreten Situation ein möglichst kleines Schutzfeld zu wählen.

Stand der Technik ist daher, in Abhängigkeit der Bewegungsrichtung und Bewegungsgeschwindigkeit zwischen verschiedenen Schutzfeldern umzuschalten. Dies geschieht beispielsweise bei einem fahrerlosen Transportfahrzeug in Abhängigkeit des Lenkwinkels und der gefahrenen Geschwindigkeit unter Berücksichtigung des Anhalteweges. Bei einem Roboter in Abhängigkeit der konkreten Roboterposition. Eine Projektierung der verschiedenen Schutzfelder wird mit zunehmender Anzahl derselben nachteilig sehr aufwendig, ebenso die Validierung der Sicherheitsfunktion. Weiterhin führt ein erkanntes Hindernis in jedem Fall zum Stopp der Maschine und damit zu einer unerwünschten Betriebsunterbrechung.

Die US2009/0149990A1 offenbart ein Verfahren, ein Medium und eine Vorrichtung zum Durchführen einer Pfadplanung eines mobilen Roboters. Die Vorrichtung zum Durchführen einer Pfadplanung eines mobilen Roboters umfasst eine Grobkartenerzeugungseinheit zum Erzeugen einer Grobkarte, die aus einer Vielzahl von Zellen besteht; eine Feinkarten-Erzeugungseinheit zum Erzeugen einer Feinkarte, die aus einer Vielzahl von Unterzellen besteht, in die mindestens eine der Vielzahl von Zellen unterteilt ist, und einer Pfaderzeugungseinheit zum Steuern der Feinkarten-Erzeugungseinheit.

Die EP 2 837 473 A2 offenbart eine Projektionseinheit für eine selbsttätig mobile Plattform, insbesondere für einen frei beweglichen Transportroboter und/oder für ein oder mehrere frei bewegliche Transporteinrichtungen eines Transportroboters, wobei die Projektionseinheit für eine Signalgebung zur Projektion des Bewegungspfades der mobilen Plattform eingerichtet ist, wobei die Projektion im räumlichen Umfeld der mobilen Plattform erfolgt.

Eine Aufgabe der Erfindung besteht daher darin, eine Steuerung für eine Maschine bereitzustellen, welche abhängig von einer Position eines Objektes oder Menschen sein soll. Die Steuerung soll sicher, einfach und überschaubar sein, so dass eine Validierung der Steuerung möglich ist.

Die Aufgabe wird gemäß Anspruch 1 gelöst durch eine Vorrichtung zur Sicherheitssteuerung einer Maschine, mit wenigstens einem sicheren Objektsensor zur Detektion von Objekten und gleichzeitiger Überwachung mehrerer Segmente einer Fläche, einer sicheren Steuer- und Auswerteeinheit zur Auswertung der Signale des wenigstens einen Objektsensors und zur Erzeugung von Steuersignalen für die Maschine, wobei die Steuer- und Auswerteeinheit ausgebildet ist, mindestens eine Trajektorie für die Maschine zu berechnen und die berechnete Trajektorie auszuwählen, welche Segmente meidet, in denen Objekte detektiert sind und Segmente wählt, in denen keine Objekte detektiert sind.

Die Erfindung besteht also aus einem Sensor, der eine Fläche überwacht. Die Fläche ist in eine Mehrzahl von kleineren Segmenten aufgeteilt. Eine Detektion eines Objektes in einem Segment erzeugt ein segmentspezifisches Signal. Für jedes Segment wird mindestens ein eigenes Signal erzeugt, um anzuzeigen, ob ein Objekt detektiert wurde oder nicht. Dabei handelt es sich beispielsweise um eine binäre Information pro Segment, ob ein Objekt detektiert wurde oder nicht. Damit liegt eine diskretisierte Ortsinformation vor. Damit ist eine hohe Flexibilität bei minimalem Verarbeitungsaufwand gegeben. Dabei wird eine unmittelbare Detektion des Objektes in dem Segment erkannt und auch eine potentielle Detektion in dem Segment, beispielsweise durch eine Abschattung von Lichtstrahlen in der Nähe des Sensors oder durch Objekte in benachbarten Segmenten, so dass beispielsweise ein einziges Objekt in zwei benachbarten Segmenten detektiert wird.

Die dem Sensor übergeordnete Steuer- und Auswerteeinheit erhält also pro Segment die Information, ob dieses Segment definitiv leer, also sicher ist, oder sich darin potentiell ein Objekt beispielsweise ein Mensch befindet und damit nicht sicher ist.

Ausgehend von diesen Informationen zu den Segmenten ist die Steuer- und Auswerteeinheit ausgebildet, unter mehreren möglichen Trajektorien mindestens eine Trajektorie, also eine Bahn, Bahnkurve oder einen Pfad zu ermitteln, die durch die Segmente führt, die frei, also nicht belegt sind. Dadurch kommt es nicht zu einer Gefährdung der Objekte in den Segmenten mit den detektierten Objekten.

Die sichere Steuer- und Auswerteeinheit kennt die Position der Maschine innerhalb der Segmente, bzw. die Trajektorie, beispielsweise aus einem gebildeten Modell aus fortlaufenden sicheren Messwerten der Antriebe.

Durch die Unterteilung der insgesamt zu überwachenden Fläche in Segmente entsteht eine einerseits sehr flexible, andererseits jedoch eine noch übersichtliche Funktionalität, so dass die Abfolgen in der übergeordneten Steuer- und Auswerteeinheit übersichtlich programmiert werden können und die Validierung in der Applikation vereinfacht wird.

Die Steuer- und Auswerteeinheit ist beispielsweise mit dem sicheren Objektsensor in einem gemeinsamen Gehäuse integriert.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen zweikanaligen redundanten oder zweikanalig diversitären Aufbau einer Steuer- und Auswerteeinheit zur Fehleraufdeckung und zur Funktionsprüfung gewährleistet. Der sichere Objektsensor oder Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der sichere Objektsensor optional über eine Sensortestung.

In Weiterbildung der Erfindung ist eine Geschwindigkeit der Maschine und ein Abstand der Maschine zu einem Segment, in dem ein Objekte detektiert ist, derart angepasst, dass eine Gefährdung des Objektes ausgeschlossen ist, wobei die Geschwindigkeit eine sichere Geschwindigkeit ist und der Abstand ein sicherer Abstand ist.

Damit wird, falls es sich bei dem Objekt um eine Person handelt, eine Irritation vermieden, da die Maschine beispielsweise auf dem Weg in Richtung der Person die Geschwindigkeit verringert und vor der Person eine Ausweichbewegung durchführt. Falls eine Interaktion zwischen dem Objekt, beispielsweise dem Mensch oder einem Materialobjekt und der Maschine eine Interaktion gewünscht oder beabsichtigt ist, z. B. für das Einlegen eines Werkstücks, hält die Maschine möglichst nahe und in geeigneter Position am besetzten Segment an.

In Weiterbildung der Erfindung ist die sichere Steuer- und Auswerteeinheit eine sichere Sicherheitssteuerung. Dabei kann es sich um eine externe Sicherheitssteuerung handeln, die über eine Leitung mit dem sicheren Objektsensor verbunden ist. Bei der Sicherheitssteuerung handelt es sich um eine Sicherheitssteuerung gemäß der Maschinenrichtlinie, beispielsweise nach Kategorie 4 (EN ISO 13849), Sicherheits-Integritätslevel SIL3 (IEC 61508) oder SILCL3 (EN62061).

Dadurch wird ein modulares System aus Sicherheitsteuerung und mindestens einem sicheren Objektsensor gebildet. Die Sicherheitssteuerung kann dabei je nach funktionaler Anforderung bzw. je nach Sicherheitslevel individuell ausgewählt werden.

In Weiterbildung der Erfindung sind die sichere Steuer- und Auswerteeinheit und der sichere Objektsensor über einen Feldbus mit Sicherheitsprotokoll verbunden. Über den Feldbus können eine Vielzahl von Daten quasi gleichzeitig übertragen werden. Dabei kann die sichere Information zu jedem Segment, ob dieses belegt oder frei ist, an die Sicherheitssteuerung übertragen werden. Bei dem Feldbus mit Sicherheitsprotokoll kann es sich um bekannte offene Feldbusse handeln oder auch um spezielle Firmenlösungen handeln.

In Weiterbildung der Erfindung sind die Segmente quadratisch, rechteckförmig, trapezförmig und/oder dreieckförmig einstellbar. Segmente mit diesen Formen lassen sich einfach aneinanderreihen, um eine nahezu beliebige größere Fläche modular zu bilden. Die Segmente weisen dabei optional auch dieselbe Größe auf. Jedoch ist es gemäß der Erfindung ausdrücklich auch vorgesehen, Segmente unterschiedlicher Größe zu verwenden. Dabei kann je nach Größe der Segmente eine beliebige Fläche fein abgedeckt werden, ohne jedoch die Anzahl der Segmente unnötig zu erhöhen. Soll beispielsweise eine rechteckige Fläche überwacht werden können einfach quadratische oder rechteckige Segmente verwendet werden. Mit Hilfe von trapezförmigen oder dreieckigen Segmenten lassen sich auch spitze Formen abdecken. Beispielsweise können fächerförmige Flächen je nach gewünschter Anwendung mit dreieckförmigen oder trapezförmigen Segmenten gebildet sein. Je nach gewünschter Fläche können auch Segmente mit unterschiedlichen Flächen kombiniert werden. Die Segmente liegen dabei vorzugsweise in einer gemeinsamen Ebene.

In Weiterbildung der Erfindung weisen die Segmente gleiche Formen auf. Dadurch wird die Auswertung weiter vereinfacht und für den Anwender ist die Anwendung weiter vereinfacht, da alle Flächen nur mit gleichartigen Segmentflächen gebildet werden.

Gemäß einer bevorzugten Ausführungsform ist der Objektsensor ein Laserscanner. Ein Laserscanner sendet einen Lichtstrahl aus dessen Lichtlaufzeit ausgewertet wird, um eine Entfernung zu einem Objekt zu erfassen. Der Lichtstrahl wird dabei vorzugsweise über eine Lichtablenkeinheit nacheinander in verschiedenen Richtungen abgelenkt, um einen Überwachungsbereich abzudecken. Bei der Lichtablenkeinheit handelt es sich beispielsweise um einen Drehspiegel.

Jedoch kann es sich bei dem Laserscanner auch um einen Laserscanner mit einer Vielzahl von Sende- und Empfangspaaren handeln, die statisch fest angeordnet sind und mit dem ein flächiger Bereich überwacht wird.

Weiter kann gemäß der Erfindung auch eine Kamera als sicherer Objektsensor, insbesondere eine Time-of-flight Kamera, vorgesehen sein, die es ebenso ermöglicht, die Lichtlaufzeit von empfangenem Licht auszuwerten und daraus eine Vielzahl von Entfernungspunkten zu berechnen.

Als Time-of-flight Sensorelement kann für die Kamera als auch für den Laserscanner mindestens eine sogenannte Einzelphotonenlawinendiode, welche auch unter der Bezeichnung 'single photon avalanche photodiode' kurz SPAD bekannt ist, verwendet werden. Andere gängige Bezeichnungen sind 'Silicon Photomultiplier' (SiPM), 'Geigermode Avalanche Photon Diode' oder 'Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von 10⁶ können bereits geringste Empfangsleistungen bis zu Einzelphotonen detektiert werden.

Eine Verwendung eines Lichtlaufzeitsensors, insbesondere die Verwendung von Einzelphotonenlawinendioden in Kombination mit Pulslasern, liefern Abstandsinformationen mit einer Genauigkeit von beispielsweise bis zu ca. einem Millimeter. Gleichzeitig erlaubt eine einfache Vorsatzoptik über eine Fokussierung die Realisierung von guter Ortsselektivität und Abgrenzung gegenüber Störlicht.

Zur Entfernungsmessung sind verschiedene Lichtlaufzeitverfahren mit einer entsprechenden Auswertung implementierbar.

Es kann ein Pulsverfahren vorgesehen sein. Beispielsweise sind ein oder mehrere Zeit-zu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter kann ein CW-Verfahren (Continuous Wave) bzw. das synonyme Dauerstrich-Verfahren eingesetzt werden, wobei ein zeitlich durchgängig moduliertes Lichtsignal eingesetzt wird. Bei diesem Verfahren werden über ein Gating-Signal die Einzelphotonenevents in zwei Zähler verteilt und aus dem Verhältnis der Zählerstände eine Phase berechnet.

Weiter können analoge Signale eines Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch eine Zählrate oder durch eine Spannungsamplitude bei einer analogen Auswertung. Durch den Amplitudenwert kann eine Plausibilitätsprüfung, insbesondere bei sicherheitstechnischen Anwendungen, durchgeführt werden.

In Weiterbildung der Erfindung sind mindestens zwei Objektsensoren, insbesondere zwei Laserscanner vorgesehen, welche jeweils identische Segmente aus unterschiedlichen Richtungen erfassen. Dadurch werden Objekte aus unterschiedlichen Richtungen erfasst und störende Abschattungen vermieden, wodurch mehr Segmente als frei klassifiziert werden können. Die Messwerte der Sensoren werden beispielsweise in einem gemeinsamen Koordinatenfeld zusammengeführt bzw. verrechnet. Die verschiedenen Objektsensoren erfassen dabei eine identische Fläche und identische Segmente. Die jeweilige Segmentinformation wird dabei logisch ,ODER' verknüpft. D. h. ein Segment wird als frei beurteilt wenn wenigstens einer der Sensoren dieses Segment als frei meldet. Dadurch sind dann auch entstehende Okklusionen beherrscht.

In Weiterbildung der Erfindung ist die Maschine ein Roboter. Ein Roboter der hier vorgesehenen Art weist beispielsweise einen vielgliedrigen Arm mit einem Werkzeug auf, um beispielsweise Handhabungsvorgänge durchzuführen oder bestimmte immer auf gleiche Art wiederholende Bewegungsabläufe durchzuführen. Diese Handhabungsaufgaben können in Interaktion mit anderen Robotern, Maschinen oder auch menschlichen Personen erfolgen. Dabei ist es gemäß der Erfindung vorgesehen, das Bewegungsfeld des Roboters mit dem mindestens einen Objektsensor zu überwachen, und das Bewegungsfeld in einzelne Segmente zu unterteilen.

In einer bevorzugten alternativen Ausführungsform ist die Maschine ein Fahrzeug. Dabei kann es sich beispielsweise um ein autonomes führerloses Fahrzeug handeln, insbesondere ein führerloses Kleinfahrzeug, das beispielsweise Material zwischen Bearbeitungsstationen transportiert. Dabei ist an mindestens einer Seite oder an mindestens einer Ecke des Fahrzeugs ein Objektsensor angeordnet, um eine zur Fahrbahn parallele oder geneigte Fläche zu überwachen. Diese Fläche ist gemäß der Erfindung in Segmente unterteilt, die überwacht werden. Sind einzelne Segmente durch Objekte belegt, umfährt das Fahrzeug diese. Die Steuer- und Auswerteeinheit übernimmt die Aufgabe, eine Trajektorie bzw. Bahn für das Fahrzeug zu wählen, die die besetzten Segmente vermeidet, d. h. um die Hindernisse bzw. Objekte bzw. Menschen herumfährt. Dabei ist die Geschwindigkeit dem Abstand zwischen Fahrzeug und z. B. Mensch so angepasst, dass eine Gefährdung weiter ausgeschlossen bleibt, sowie eine Irritation der Menschen vermieden wird. Nur wenn entweder keine entsprechende Trajektorie zur Verfügung steht oder die Interaktion mit einem Menschen beabsichtigt ist, z. B. für das Beladen von Material, möglichst nahe an dem Segment und damit am Menschen anhält. Für die Berechnung der Trajektorie sind der Steuer- und Auswerteeinheit die eigene Relativposition bekannt, bzw. erhält die Steuer- und Auswerteeinheit fortlaufend Messwerte von den Antrieben, um fortlaufend ein Positionsmodell zu erstellen.

In Weiterbildung der Erfindung sind die Steuersignale für das Fahrzeug Lenk- oder Bremssignale.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine Vorrichtung zur Sicherheitssteuerung einer Maschine mit wenigstens einem sicheren Objektsensor;
- Figur 2 und 3: jeweils ein Fahrzeug mit einem Laserscanner.

In den nachfolgenden Figuren sind identische Teile mit identischen Bezugszeichen versehen.

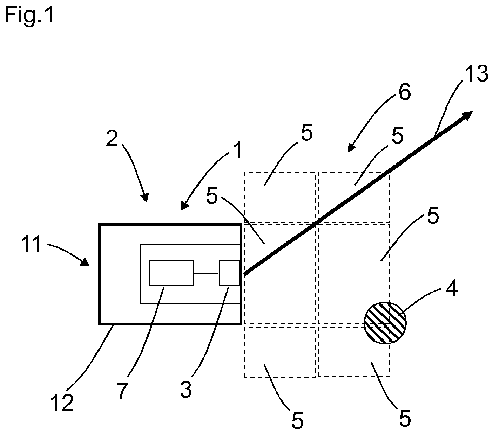

Figur 1 zeigt eine Vorrichtung 1 zur Sicherheitssteuerung einer Maschine 2 mit wenigstens einem sicheren Objektsensor 3 zur Detektion von Objekten 4 und gleichzeitiger Überwachung mehrerer Segmente 5 einer Fläche 6, einer sicheren Steuer- und Auswerteeinheit 7 zur Auswertung der Signale des wenigstens einen Objektsensors 3 und zur Erzeugung von Steuersignalen für die Maschine 2, wobei die Steuer- und Auswerteeinheit 7 ausgebildet ist, mindestens eine Trajektorie 13 für die Maschine 2 zu berechnen und die berechnete Trajektorie 13 auszuwählen, welche Segmente 5 meidet, in denen Objekte 4 detektiert sind und Segmente 4 wählt, in denen keine Objekte 4 detektiert sind.

Die Fläche 6 ist in eine Mehrzahl von kleineren Segmenten 5 aufgeteilt. Eine Detektion eines Objektes 4 in einem Segment 5 erzeugt ein segmentspezifisches Signal. Für jedes Segment 5 wird mindestens ein eigenes Signal erzeugt, um anzuzeigen, ob ein Objekt 4 detektiert wurde oder nicht. Dabei wird eine unmittelbare Detektion des Objektes 4 in dem Segment 5 erkannt und auch eine potentielle Detektion in dem Segment 5 beispielsweise durch eine Abschattung von Lichtstrahlen in der Nähe des Sensors 3 oder durch Objekte 4 in benachbarten Segmenten 5, so dass beispielsweise ein einziges Objekt 4 in zwei benachbarten Segmenten 5 detektiert wird.

Die dem Sensor 3 übergeordnete Steuer- und Auswerteeinheit 7 erhält also pro Segment 5 die Information, ob dieses Segment 5 definitiv leer, also sicher ist oder sich darin potentiell ein Objekt 4 beispielsweise ein Mensch befindet und damit nicht sicher ist.

Ausgehend von diesen Informationen zu den Segmenten 5 ist die Steuer- und Auswerteeinheit 7 ausgebildet, aus mehreren möglichen Trajektorien mindestens eine Trajektorie 13 also eine Bahn, Bahnkurve oder einen Pfad zu ermitteln die durch die Segmente 5 führt, die frei, also nicht belegt sind. Dadurch kommt es nicht zu einer Gefährdung der Objekte 4 in den Segmenten 5 mit den detektierten Objekten 4.

Die sichere Steuer- und Auswerteeinheit 7 kennt die Position der Maschine 2 innerhalb der Segmente 5, bzw. die Trajektorie 13, beispielsweise aus einem gebildeten Modell aus fortlaufenden sicheren Messwerten der Antriebe der Maschine.

Die Steuer- und Auswerteeinheit 7 ist gemäß Figur 1 mit dem sicheren Objektsensor 3 in einem gemeinsamen Gehäuse integriert.

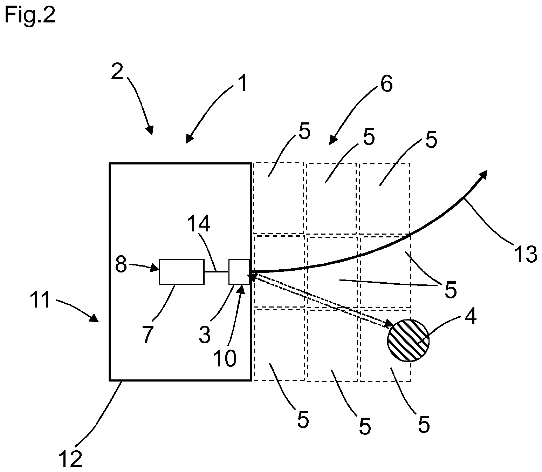

Gemäß Figur 2 sind die sichere Steuer- und Auswerteeinheit 7 und der sichere Objektsensor 3 über einen Feldbus 14 mit Sicherheitsprotokoll verbunden. Über den Feldbus 14 können eine Vielzahl von Daten quasi gleichzeitig übertragen werden. Dabei kann die sichere Information zu jedem Segment 5, ob dieses belegt oder frei ist, an die Sicherheitssteuerung 8 übertragen werden.

Gemäß Figur 1 und Figur 2 sind die Segmente 5 rechteckförmig ausgebildet.

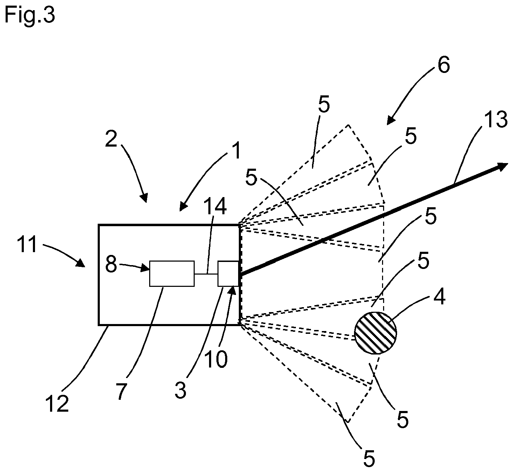

Gemäß Figur 3 sind die Segmente 5 trapezförmig und dreieckig ausgebildet.

Gemäß den Figuren sind die Segmente 5 aneinandergereiht, um eine nahezu beliebige größere Fläche 6 modular zu bilden. Gemäß Figur 2 weisen die Segmente 5 dabei auch dieselbe Größe auf. Gemäß Figur 1 und Figur 3 sind Segmente 5 unterschiedlicher Größe vorgesehen. Gemäß Figur 1 und Figur 2 weisen die Segmente 5 gleiche Formen auf.

Gemäß Figur 2 und Figur 3 ist der Objektsensor 3 ein Laserscanner 10. Ein Laserscanner 10 sendet einen Lichtstrahl aus dessen Lichtlaufzeit ausgewertet wird, um eine Entfernung zu einem Objekt 4 zu erfassen. Der Lichtstrahl wird dabei vorzugsweise über eine Lichtablenkeinheit nacheinander in verschiedenen Richtungen abgelenkt, um einen Überwachungsbereich abzudecken. Bei der Lichtablenkeinheit handelt es sich beispielsweise um einen Drehspiegel.

Gemäß den Figuren 1 bis 3 ist die Maschine 2 ein Fahrzeug 11, insbesondere ein autonomes führerloses Fahrzeug 11, das beispielsweise Material zwischen Bearbeitungsstationen transportiert. Dabei ist an einer Seite ein Objektsensor 3 angeordnet, um eine zur Fahrbahn parallele oder geneigte Fläche 6 zu überwachen. Diese Fläche 6 ist gemäß den Figuren in Segmente 5 unterteilt, die überwacht werden. Sind einzelne Segmente 5 durch Objekte 4 belegt, umfährt das Fahrzeug 11 diese. Die Steuer- und Auswerteeinheit 7 übernimmt die Aufgabe, eine Trajektorie 13 bzw. Bahn für das Fahrzeug 11 zu wählen, die die besetzten Segmente 5 vermeidet, d. h. um die Hindernisse bzw. Objekte 4 bzw. Menschen herumfährt. Dabei ist die Geschwindigkeit des Fahrzeugs, der Abstand zwischen Fahrzeug 11 und z. B. Mensch so angepasst, dass eine Gefährdung weiter ausgeschlossen bleibt, sowie eine Irritation des Menschen vermieden wird. Nur wenn entweder keine entsprechende Trajektorie 13 zur Verfügung steht oder die Interaktion mit einem Menschen beabsichtigt ist, z. B. für das Beladen von Material, hält das Fahrzeug möglichst nahe an dem Segment und damit am Menschen an. Für die Berechnung der Trajektorie 13 sind der Steuer- und Auswerteeinheit 7 die eigene Relativposition bekannt, bzw. erhält die Steuer- und Auswerteeinheit 7 fortlaufend Messwerte von den Antrieben, um fortlaufend ein Positionsmodell zu erstellen.

### Bezugszeichen:

1 Vorrichtung
2 Maschine
3 Objektsensor
4 Objekt
5 Segmente
6 Fläche
7 Steuer- und Auswerteeinheit
8 Sicherheitssteuerung
9 Feldbus
10 Laserscanner
11 Fahrzeug
12 fahrerloses Fahrzeug
13 Trajektorie
14 Feldbus

## Patentansprüche

1. Vorrichtung zur Sicherheitssteuerung einer Maschine (2),
mit wenigstens einem Objektsensor (3) zur Detektion von Objekten (4) und gleichzeitiger Überwachung mehrerer Segmente (5) einer Fläche (6),
einer Steuer- und Auswerteeinheit (7) zur Auswertung der Signale des wenigstens einen Objektsensors (3) und zur Erzeugung von Steuersignalen für die Maschine (2),
wobei die Steuer- und Auswerteeinheit (7) ausgebildet ist, mindestens zwei Trajektorien für die Maschine (2) zu berechnen und die berechnete Trajektorie (13) auszuwählen, welche Segmente (5) meidet in denen Objekte (4) detektiert sind und Segmente (5) wählt, in denen keine Objekte (4) detektiert sind, **dadurch gekennzeichnet, dass** der Objektsensor eigensicher ausgebildet ist und interne Fehler erkennt, wobei die Steuer- und Auswerteeinheit (7) einen zweikanalig redundanten oder zweikanalig diversitären Aufbau aufweist, wobei eine Geschwindigkeit der Maschine (2) und ein Abstand der Maschine (2) zu einem Segment (5), in dem ein Objekt (4) detektiert ist, derart angepasst ist, dass eine Gefährdung des Objektes (4) ausgeschlossen ist, wobei die Maschine auf dem Weg in Richtung des Objekts die Geschwindigkeit verringert und vor dem Objekt eine Ausweichbewegung durchführt, wobei die Steuer- und Auswerteeinheit (7) und der Objektsensor (3) über einen Feldbus (9) mit Sicherheitsprotokoll verbunden sind.

2. Vorrichtung nach mindestens einem der vorhergehenden Ansprüche,
**dadurch gekennzeichnet,**
**dass** die Steuer- und Auswerteeinheit (7) eine Sicherheitssteuerung (8) ist.

3. Vorrichtung nach mindestens einem der vorhergehenden Ansprüche,
**dadurch gekennzeichnet,**
**dass** die Segmente (5) quadratisch, rechteckförmig, trapezförmig und/oder dreieckförmig einstellbar sind.

4. Vorrichtung nach mindestens einem der vorhergehenden Ansprüche,
**dadurch gekennzeichnet,**
**dass** die Segmente (5) gleiche Formen aufweisen.

5. Vorrichtung nach mindestens einem der vorhergehenden Ansprüche,
**dadurch gekennzeichnet,**
**dass** der Objektsensor (3) ein Laserscanner (10) ist.

6. Vorrichtung nach mindestens einem der vorhergehenden Ansprüche,
**dadurch gekennzeichnet,**
**dass** mindestens zwei Objektsensoren (3) vorgesehen sind, welche jeweils identische Segmente (5) aus unterschiedlichen Richtungen erfassen.

7. Vorrichtung nach mindestens einem der vorhergehenden Ansprüche,
**dadurch gekennzeichnet,**
**dass** die Maschine (2) ein Roboter ist.

8. Vorrichtung nach mindestens einem der vorhergehenden Ansprüche 1 bis 6
**dadurch gekennzeichnet,**
**dass** die Maschine (2) ein Fahrzeug (11) ist.

9. Vorrichtung nach Anspruch 8,
**dadurch gekennzeichnet,**
**dass** das Fahrzeug (11) ein fahrerloses autonomes Fahrzeug (12) ist.

10. Vorrichtung nach Anspruch 8 bis 9,
**dadurch gekennzeichnet,**
**dass** die Steuersignale für das Fahrzeug (11) Lenk- oder Bremssignale sind.

## Claims

1. A device for the safety control of a machine (2),
having at least one object sensor (3) for the detection of objects (4) and for the simultaneous monitoring or a plurality of segments (5) of a surface (6); and
having a safe control and evaluation unit (7) for evaluating the signals of the at least one object sensor (3) and for producing control signals for the machine (2),
wherein the control and evaluation unit (7) is configured to calculate at least two trajectories (13) for the machine (2) and to select the calculated trajectory (13) that avoids segments (5) in which objects (4) are detected and that selects segments (5) in which no objects (4) are detected, **characterized in that** the object sensor is configured as intrinsically safe and recognizes internal defects, with the control and evaluation unit (7) having a design that has dual channel redundancy or dual channel diversity, with a speed of the machine (2) and a distance of the machine (2) from a segment (5) in which an object (4) has been detected being adapted such that a danger to the object (4) is precluded, with the machine reducing the speed on the way in the direction of the object (4) and carrying out an evasive movement before the object, and with the control and evaluation unit (7) and the object sensor (3) being connected via a fieldbus (9) having a safety protocol.

2. A device in accordance with at least one of the preceding claims,
**characterized in that** the safe control and evaluation unit (7) is a safety controller (8).

3. A device in accordance with at least one of the preceding claims,
**characterized in that** the segments (5) can be set as square, rectangular, trapezoid and/or triangular.

4. A device in accordance with at least one of the preceding claims,
**characterized in that** the segments (5) have the same shapes.

5. A device in accordance with at least one of the preceding claims,
**characterized in that** the object sensor (3) is a laser scanner (10).

6. A device in accordance with at least one of the preceding claims,
**characterized in that** at least two object sensors (3) are provided that each detect identical segments (5) from different directions.

7. A device in accordance with at least one of the preceding claims,
**characterized in that** the machine (2) is a robot.

8. A device in accordance with at least one of the claims 1 to 6,
**characterized in that** the machine (2) is a vehicle (11).

9. A device in accordance with claim 8,
**characterized in that** the machine (11) is an automated guided vehicle (12).

10. A device in accordance with claim 8 to claim 9,
**characterized in that** the control signals for the vehicle (11) are steering signals or brake signals.

## Revendications

1. Dispositif pour la commande de sécurité d'une machine (2), comportant au moins un capteur d'objet (3) pour détecter des objets (4) et surveiller simultanément plusieurs segments (5) d'une surface (6), une unité de commande et d'évaluation (7) pour évaluer les signaux dudit au moins un capteur d'objet (3) et pour générer des signaux de commande pour la machine (2),
l'unité de commande et d'évaluation (7) étant conçue pour calculer au moins deux trajectoires pour la machine (2) et pour sélectionner la trajectoire calculée (13) qui évite les segments (5) dans lesquels des objets (4) sont détectés et qui sélectionne les segments (5) dans lesquels aucun objet (4) n'est détecté,
**caractérisé en ce que**
le capteur d'objet est conçu pour être à sécurité intrinsèque et détecte des défauts internes, l'unité de commande et d'évaluation (7) présente une structure à deux canaux redondants ou à deux canaux diversifiés, une vitesse de la machine (2) et une distance de la machine (2) par rapport à un segment (5) dans lequel un objet (4) est détecté sont adaptées de telle sorte qu'un danger pour l'objet (4) est exclu, la machine réduit la vitesse sur le chemin vers l'objet et effectue un mouvement d'esquive devant l'objet, l'unité de commande et d'évaluation (7) et le capteur d'objet (3) sont reliés par un bus de terrain (9) avec protocole de sécurité.

2. Dispositif selon la revendication précédente,
**caractérisé en ce que** l'unité de commande et d'évaluation (7) est un contrôleur de sécurité (8).

3. Dispositif selon l'une au moins des revendications précédentes,
**caractérisé en ce que** les segments (5) sont réglables pour être carrés, rectangulaires, trapézoïdaux et/ou triangulaires.

4. Dispositif selon l'une au moins des revendications précédentes,
**caractérisé en ce que** les segments (5) ont des formes identiques.

5. Dispositif selon l'une au moins des revendications précédentes,
**caractérisé en ce que** le capteur d'objet (3) est un scanner laser (10).

6. Dispositif selon l'une au moins des revendications précédentes,
**caractérisé en ce que** il est prévu au moins deux capteurs d'objet (3) qui détectent des segments respectifs identiques (5) depuis des directions différentes.

7. Dispositif selon l'une au moins des revendications précédentes,
**caractérisé en ce que** la machine (2) est un robot.

8. Dispositif selon l'une au moins des revendications 1 à 6,
**caractérisé en ce que** la machine (2) est un véhicule (11).

9. Dispositif selon la revendication 8,
**caractérisé en ce que** le véhicule (11) est un véhicule autonome sans conducteur (12).

10. Dispositif selon les revendications 8 à 9,
**caractérisé en ce que** les signaux de commande pour le véhicule (11) sont des signaux de braquage ou de freinage.
